# EUROPÄISCHE PATENTSCHRIFT

(11) **EP 1 424 385 B1**
(45) Veröffentlichungstag und Bekanntmachung des Hinweises auf die Patenterteilung: **09.03.2005**
(21) Anmeldenummer: 03025896.6
(22) Anmeldetag: 12.11.2003
(51) Int. Cl.: C12C 3/10

(54) **Verfahren zur Herstellung eines Xanthohumol-angereicherten Hopfenextrakts und dessen Verwendung**
Method for preparing a xanthohumol enriched hop extract and use thereof
Procédé de préparation d'un extrait de houblon enrichi en xanthohumole et son utilisation

(30) Priorität: 30.11.2002 DE 10256031
(43) Veröffentlichungstag der Anmeldung: 02.06.2004
(73) Patentinhaber: NATECO2 GmbH & Co. KG, 85283 Wolnzach (DE)
(72) Erfinder: Forster, Adrian, Dr., 85283 Wolnzach (DE); Schulmeyr, Josef, 85283 Wolnzach (DE); Schmidt, Roland, 85283 Wolnzach (DE); Simon, Karin, 85276 Pfaffenhofen (DE); Ketterer, Martin, Dr., 85283 Wolnzach (DE); Forchhammer, Birgit, 93333 Neustadt (DE); Geyer, Stefan, 85283 Wolnzach (DE); Gehrig, Manfred, Dr., 85283 Wolnzach (DE)
(74) Vertreter: Hübner, Gerd, Dipl.-Phys.

(56) Entgegenhaltungen:
- EP-A- 0 261 421
- DE-A- 4 136 539
- DE-A- 10 139 479
- DE-A- 19 939 350
- DE-B- 2 920 765

## Beschreibung

Die Erfindung betrifft ein Verfahren zur Herstellung eines Xanthohumol-angereicherten Hopfenextraktes sowie die Verwendung eines solchen Extraktes.

Zum Hintergrund der Erfindung sollen eingangs die ernährungsphysiologischen Grundlagen der Erfindung kurz dargestellt werden. Demnach ist Hopfen ein unentbehrlicher Rohstoff für die Bierbereitüng. Er enthält in getrockneter Form drei wesentliche Wirkstoffgruppeh. Die Hopfenharze verleihen dem Bier die charakteristische Bittere. Das Hopfenöl mit seinen vielfältigen Aromakomponenten vermittelt dem Bier ein typisches Aroma. Die Hopfengerbstoffe bestehen aus zahlreichen Polyphenolen wie z. B. Flavanolen, Proanthocyanidinen, Flavanoiden des Kämpferöls und Quercetins, Benzoesäuren und Zimtsäuren. Ihre Bewertung für die Bierqualität stellt sich nicht homogen dar.

Die meisten Polyphenole des Hopfens sind in Heißwasser gut löslich. Sie wirken antioxidativ und tragen zum Geschmack bei. Da sie aber im fertigen Bier während dessen Lagerung mit Proteinen trübende Komplexe bilden, wird ihr Wert differenziert beurteilt. So gibt es viele Brauereien, die auf die Dosage von Hopfenpolyphenolen bewusst verzichten, um die Haltbarkeit ihrer Biere zu verbessern und deren Trübungsanfälligkeit zu verringern.

Gerbstofffreie Hopfenprodukte erhält man über die Extraktion von Hopfen mit Lösemitteln. Hier hat sich weltweit inzwischen flüssiges und besonders überkritisches CO₂ durchgesetzt, das zwar alle Bitter- und Aromastoffe, aber keine Polyphenole löst. Von geringerer Bedeutung sind mit Ethanol hergestellte Extrakte.

Hopfen enthält ein sehr spezifisches Polyphenol, nämlich ein Flavanoid der Chalkongruppe, das Xanthohumol. Weltweite Untersuchungen der letzten Jahre zeigen, dass Xanthohumol hoch interessante anticancerogene Eigenschaften aufweist. Die Forschungsarbeiten werden inzwischen auf lebende Zellen ausgedehnt. Es besteht die Hoffnung, Xanthohumol als krebschemopräventive Substanz in der Zukunft zu nutzen. Daraus leitet sich ab, dass eine Anreicherung von Xanthohumol aus Hopfen erforderlich ist.

Die Löslichkeit von Xanthohumol ist für ein Polyphenol ungewöhnlich. Es ist so unpolar, dass es kaum in Heißwasser, aber gut in Alkohol oder Alkoholwassergemischen löslich ist. Andererseits können unpolare Lösemittel wie Hexan Xanthohumol nicht lösen. Getrockneter Hopfen enthält eine Menge an Xanthohumol je nach Sorte von 0,2 bis 1,0 Gew.-%.

Während der Bierbereitung wandelt sich Xanthohumol in Isoxanthohumol um. Das Isoxanthohumol besitzt deutlich geringere anticancerogene Eigenschaften. Der größte Teil des Xanthohumols und auch des Isoxanthohumols wird zudem während der Bierbereitung durch Hefe, Trub und die Filtration ausgeschieden. Handelsübliches Bier ist somit keine besonders geeignete Quelle, um das krebshemmende Potential von Xanthohumol zu nutzen. Wünschenswert ist in jedem Fall ein geeigneter Xanthohumolangereicherter Extrakt, der z. B. dem fertigen Bier, anderen Lebensmitteln oder für sich als chemopräventives Präparat eingesetzt werden kann.

Hierzu liegen derzeit im Stand der Technik zwei Lösungsvorschläge vor. Die DE 199 39 350 A1 beschreibt ein Verfahren zur Herstellung eines Xanthohumol-angereicherten Hopfenextraktes, wobei Kombinationen von Wasser und Ethanol vorzugsweise in 2 Extraktionsschritten zum Einsatz gelangen. Es werden als typisch 5-15 Gew.-% Xanthohumol angegeben. Neben dem Xanthohumol werden allerdings auch andere Hopfengerbstoffe mit den bekannten Trübungsneigungen gelöst.

In einer anderen Veröffentlichung wird beschrieben, wie einem handelsüblichen, mit Ethanol gewonnenen Xanthohumol-haltigen Hopfenextrakt nach Zugabe eines festen Trägermaterials alle mit überkritischem CO₂ löslichen Bitter- und Aromastoffe entzogen werden. Zurück bleibt nach diesem Reinigungsschritt eine Mischung aus Trägermaterial, verschiedenen in CO₂ nicht löslichen Harzen und Xanthohumol, das mit etwa 2 Gew.-% gegenüber Hopfen allerdings nur schwach angereichert ist.

Davon ausgehend liegt der Erfindung die Aufgabe zugrunde, ein Verfahren zur Herstellung eines Xanthohumol-angereicherten Hopfenextraktes anzugeben, bei dem hohe Anreicherungsraten ohne organische Lösungsmittel oder mehrstufige Extraktionsverfahren bezogen auf das Xanthohumol erreichbar ist.

Die grundsätzliche Lösung dieser Aufgabe ist im Kennzeichnungsteil des Anspruches 1 angegeben und besteht darin, dass aus einem Xanthohumol-haltigen Hopfenausgangsstoff durch hochverdichtetes CO₂ als Lösemittel bei Druckwerten über 500 bar und bei Temperaturen über 60° der Xanthohumol-haltige Hopfenextrakt extrahiert wird.

Ausgehend von den derzeit vorhandenen Kenntnissen zum Stand der Technik beschreitet das erfindungsgemäße Verfahren einen Lösungsweg, der vom Stand der Technik völlig abweicht. In der Literatur wird das unpolare überkritische CO₂ nämlich immer wieder als völlig ungeeignet für die Extraktion von Xanthohumol geschildert. Um so mehr überrascht es, dass auch überkritisches CO₂ bei einer bisher völlig ungewöhnlichen Kombination von Druck und Temperatur während der Extraktion durchaus Xanthohumol zu lösen vermag. Dabei resultieren verblüffend hohe Xanthohumol-Gehalte in den gewonnenen Extrakten, worunter auch ein Gesamtextrakt aus braurelevanten Harz- und Aromastoffen und Xanthohumol zu verstehen ist.

Alle bisher zugänglichen Patente und Literaturstellen berücksichtigen und beschreiben die Extraktionseigenschaften von überkritischem CO₂ bei Drücken bis 500 bar. Beispielhaft sei hier die DE-PS 21 27 618 (Herstellung von Hopfenextrakten) genannt. Da keine Verbesserung von Löseeigenschaften oberhalb von 300 bis 500 bar feststellbar waren, ging der Fachmann davon aus, dass eine weitere Steigerung von Extraktionsdrücken keinen zusätzlichen Effekt zu erzielen vermag. Eine Verbesserung der Löseeigenschaften von überkritischem CO₂ wurde nur einer Temperatursteigerung zugesprochen, wie aus der DE PS 3346776 bekannt. Damit konnte allerdings Xanthohumol nicht gelöst werden.

Bei der Entwicklung der Erfindung wurde jedoch festgestellt, dass der Einsatz von CO₂ bei Druckwerten über den bisher beschriebenen etwa 300-500 bar zu unerwarteten Ergebnissen führt. So erweisen sich Extraktionsdrücke von etwa 600-1000 bar überraschenderweise als geeignet, um Xanthohumol zu lösen. Werden z. B. die Aroma- und Bitterstoffe bei üblichen überkritischen Bedingungen von etwa 200-300 bar und 40-60°C aus dem Hopfen extrahiert, und der Rückstand einer zweiten CO₂-Extraktion zwischen z. B. 600 bis 1000 bar und 70-90°C ausgesetzt, wird ein Hopfenextrakt von 10 bis 20 Gew.-% Xanthohumol-Anteil erzielt. Durch die geschickte Wahl der Abscheidebedingungen kann dieser Extrakt in trockener Form dem Abscheider entnommen werden. Der so gewonnene Hopfenextrakt ist besonders reich an Xanthohumol und enthält ferner Chlorophyll sowie mäßig bitternde Hopfenharzkomponenten. Er ist frei von störenden trübenden Polyphenolen wie Flavanolen und Proanthocyanidinen. Ferner enthält er kein Eiweiß, keine Kohlenhydrate und insbesondere keine unerwünschten Salze wie z. B. Nitrat. Er bedarf keiner weiteren Aufarbeitung wie einer Trocknung und enthält keinerlei hopfenfremde Zusatzstoffe.

Höhere Drücke als 1000 bar mögen gleichfalls wirksam sein. Sie konnten aus technischen Gründen nicht getestet werden. Der Xanthohumol-reiche Hopfenextrakt lässt sich auch ohne den Einsatz von Lösungsverstärkem im CO₂ herstellen. Aus verschiedenen Veröffentlichungen ist nämlich bekannt, dass überkritisches CO₂ durch den Zusatz von Schleppmitteln mit überwiegend polarerem Charakter wie beispielsweise Wasser oder Alkoholen, seine Lösungseigenschaften so verändert, dass auch polarere Substanzen aus einem Feststoff gelöst werden können. So setzt man Wasser als Lösungsverstärker ein, um Coffein aus Kaffee oder Tee mit überkritischem CO₂ zu entfernen, ohne unselektiv positive Geschmackskomponenten mit zu erfassen. Der Einsatz von Schleppmitteln lag daher auch nahe, um Xanthohumol aus Hopfen mit dem bekannten und gebräuchlichen überkritischen CO₂ zu lösen. Allerdings haben hier physiologisch unbedenkliche Löseverstärker wie Wasser, Alkohole wie Ethanol, Ester wie Ethylacetat oder Ketone wie Aceton in den üblichen Druckbereichen bis 500 bar keine drastische Verstärkung der Löslichkeit von Xanthohumol erzielen können.

Im Druckbereich über 500 bar ist der Einsatz von Schleppmitteln zwar denkbar, aber nicht zwingend erforderlich. Das hat den Vorteil, dass keinerlei Lösemittelrückstände im Hopfenextrakt in Kauf genommen werden müssen. Überraschend ist auch die Feststellung, dass als Ausgangsprodukt für eine Extraktion von Xanthohumol sowohl alle Arten von Hopfenpellets als auch mit den bisher bekannten unterkritischen und überkritischen CO₂-Verfahren extrahierte Rückstände dienen können. Dabei eignen sich auch vergleichsweise sehr trockene Hopfenpellets oder mit CO₂ vorextrahierte Hopfenpellets mit einem Wassergehalt von 3 bis ca. 15 Gew.-%.

Die Erfindung bezieht sich weiterhin auf die Verwendung eines wie vorstehend erörtert hergestellten Xanthohumol-angereicherten Hopfenextraktes als Zudosierung zu festen, pastösen oder flüssigen Lebensmitteln. Eine Zudosierung in trockener, rieselfähiger Form ist besonders als Zugabe zu festen Lebensmitteln geeignet. Vorzugsweise kann der Hopfenextrakt in seiner trocknen, rieselfähigen Form in einem geeigneten organischen Lösemittel klar gelöst und einem Getränk zugesetzt werden. Dies kann in Form einer kontinuierlichen Zugabe bei einem Pump- oder Fördervorgang erfolgen.

Als Lösemittel wird dabei bevorzugt Ethanol eingesetzt, wobei Konzentrationen von bis zu 20 Gew.-% des Xanthohumol-angereicherten Extraktes in die Lösung gegeben werden.

Weitere Merkmale, Einzelheiten und Vorteile der Erfindung werden aus der nachfolgenden Beschreibung mehrerer Ausführungsbeispiele deutlich.

### Ausführungsbeispiel 1

10 kg Hopfenpellets werden bei üblichen überkritischen (CO₂-) Bedingungen bei 250 bar und 50°C mit CO₂ extrahiert. Dabei werden die brautechnisch wertvollen Bitter- und Aromastoffe gelöst. Der Extraktionsrückstand wird in derselben Anlage oder in einer separaten Anlage mit CO₂ bei 800 bar und 80°C für 3 Stunden extrahiert. Der bei der Nachextraktion gewonnene Extrakt wird in einem Abscheider zurückgehalten und nach Beendigung der Extraktion entnommen. Er enthält je nach Rohstoff 5-20 Gew.-% Xanthohumol. Der gewonnene Extrakt ist fest und kann leicht zu einem Pulver verrieben werden.

### Ausführungsbeispiel 2

10 kg bereits mit üblichen überkritischen CO₂-Bedingungen vorextrahierte Hopfenrückstände werden mit CO₂ bei 800 bar und 80°C über 3 Stunden extrahiert. Der gewonnene, tiefgrüne Extrakt wird bei 65 bar und 50°C in einem Abscheidebehälter gesammelt. Der Xanthohumol-Gehalt beträgt je nach Rohstoff 5-20 Gew.-%.

### Ausführungsbeispiel 3

Die beiden Extraktionsschritte lassen sich auch kombinieren, indem man mit CO₂ von vorneherein bei 800 bar und 80°C eine Hopfenpelletschüttung durchströmt. Durch eine 2-stufige Abscheidung kann bei 250 bar und 60°C der Xanthohumol-angereicherte Extrakt abgeschieden werden, bei 65 bar und etwa 50°C erhält man den Brauwert-relevanten Hopfenextrakt.

### Ausführungsbeispiel 4

Besonders wirksam ist eine Nachextraktion von bereits bei üblichen Bedingungen mit überkritischem CO₂ extrahierten Hopfenpellets der Sorte Taurus. 10 kg dieser Pellets werden mit CO₂ bei 800 bar und 80°C extrahiert. Die gelösten Inhaltsstoffe werden im 1. Schritt bei 200 bar und 60°C abgeschieden. Dieser Extrakt ist besonders selektiv mit Xanthohumol angereichert und enthält bis zu 40 Gew.-% Xanthohumol. In der 2. Abscheidestufe scheidet sich bei 65 bar und 50°C ein Extraktgemisch ab, das wenig Xanthohumol enthält.

## Patentansprüche

1. Verfahren zur Herstellung eines Xanthohumol-angereicherten Hopfenextrakts, **dadurch gekennzeichnet, dass** aus einem Xanthohumol-haltigen Hopfenausgangsstoff durch hochverdichtetes CO₂ als Lösemittel bei Druckwerten über 500 bar und bei Temperaturen über 60°C der Xanthohumol-haltige Hopfenextrakt extrahiert wird.

2. Verfahren nach Anspruch 1, **dadurch gekennzeichnet, dass** bei Druckwerten zwischen 600 und 1000 bar und Temperaturen zwischen 70 und 90°C extrahiert wird.

3. Verfahren nach Anspruch 1, **dadurch gekennzeichnet, dass** als Hopfenausgangsstoff mit üblichem, überkritischen CO₂ vorextrahierte Hopfenpellets verwendet werden, die einer Nachextraktion mit CO₂ bei 600 bis 1000 bar, vorzugsweise bis 900 bar, und bei 60 bis 90°C, vorzugsweise bei 75 bis 90 °C, unterzogen werden, wonach die gelösten Inhaltsstoffe mit dem Xanthohumol-angereicherten Hopfenextrakt abgeschieden werden.

4. Verfahren nach Anspruch 3, **dadurch gekennzeichnet, dass** die Abscheidung bei einem Druck bis 200 bar, vorzugsweise von 60 bis 70 bar, und einer Temperatur bis 90 °C, vorzugsweise von 40 bis 60°C, in einem Abscheidebehälter vorgenommen wird.

5. Verfahren nach Anspruch 1, **dadurch gekennzeichnet, dass** als Hopfenausgangsstoff Hopfenpellets verwendet werden, die bei 600 bis 900 bar extrahiert werden, wonach aus dem damit gewonnenen Vorextrakt in einer 1. Stufe bei Druckwerten von 200 bis 500 bar und Temperaturen von 40 bis 90 °C der Xanthohumol-angereicherte Extrakt abgeschieden wird und in einer 2. Stufe bei Druckwerten von 60 bis 80 bar und Temperaturen von 40 bis 60 °C ein für die Bierbereitung üblicher Extrakt abgeschieden wird.

6. Verfahren nach einem der vorgenannten Ansprüche, **dadurch gekennzeichnet, dass** der Xanthohumol-angereicherte Hopfenextrakt in einem Abscheider als stabiles Pulver trocknungs- und Zusatzstoff-frei gewonnen wird.

7. Verwendung eines Xanthohumol-angereicherten Hopfenextraktes, hergestellt nach einem der vorgenannten Ansprüche, **dadurch gekennzeichnet, dass** der Hopfenextrakt als Zudosierung zu festen, pastösen oder flüssigen Lebensmitteln eingesetzt wird.

8. Verwendung eines Xanthohumol-angereicherten Hopfenextraktes nach Anspruch 7, **dadurch gekennzeichnet, dass** der Hopfenextrakt in einer trockenen, rieselfähigen Form zudosiert wird.

9. Verwendung eines Xanthohumol-angereicherten Hopfenextraktes nach Anspruch 7, **dadurch gekennzeichnet, dass** der Hopfenextrakt in seiner trockenen, rieselfähigen Form in einem geeigneten organischen Lösemittel klar gelöst und einem Getränk zugesetzt wird, vorzugsweise in Form einer kontinuierlichen Zugabe bei einem Pump- oder Fördervorgang.

10. Verwendung eines Xanthohumol-angereicherten Hopfenextraktes nach Anspruch 9, **dadurch gekennzeichnet, dass** als Lösemittel Ethanol eingesetzt wird und Konzentrationen von bis zu 20 Gew.-% des Xanthohumol-angereicherten Extraktes in der Lösung zum Einsatz gelangen.

## Claims

1. A method of producing a xanthohumol-concentrated hop extract, **characterized in that** the xanthohumol-containing hop extract is extracted from a xanthohumol-containing hop raw material by highly compressed CO₂ as a solvent at pressures above 500 bar and at temperatures above 60°C.

2. A method according to claim 1, **characterized in that** extraction takes place at pressures between 600 and 1000 bar and at temperatures between 70 and 90°C.

3. A method according to claim 1, **characterized in that** hop pellets, pre-extracted with usual, supercritical CO₂, are used as hop raw material, the pellets being subjected to subsequent extraction with CO₂ at 600 to 1000 bar, preferably up to 900 bar, and at 60 to 90°C, preferably at 75 to 90°C, after which the dissolved ingredients are separated together with the xanthohumol-concentrated hop extract.

4. A method according to claim 3, **characterized in that** separation takes place in a separating vessel at a pressure of up to 200 bar, preferably of 60 to 70 bar, and a temperature of up to 90°C, preferably of 40 to 60°C.

5. A method according to claim 1, **characterized in that** hop pellets are used as a hop raw material, which are extracted at 600 to 900 bar, after which the xanthohumol-concentrated extract is separated from the pre-extract, thus obtained, at pressures of 200 to 500 bar and temperatures of 40 to 90°C in a first step, and an extract, usual for beer brewing, is separated at pressures of 60 to 80 bar and temperatures of 40 to 60°C in a second step.

6. A method according to one of the preceding claims, **characterized in that** the xanthohumol-concentrated hop extract is gained in a separator as a stable powder that needs no drying and is free from additives.

7. Use of a xanthohumol-concentrated hop extract which is produced according to one of the preceding claims, **characterized in that** the hop extract is used as an admixture to solid, pasty or liquid food.

8. Use of a xanthohumol-concentrated hop extract according to claim 7, **characterized in that** the hop extract is admixed in a dry, pourable form.

9. Use of a xanthohumol-concentrated hop extract according to claim 7, **characterized in that** the hop extract, in its dry, pourable form, is completely dissolved in an appropriate organic solvent and added to beverage, preferably by way of continuous addition during a pumping or conveying process.

10. Use of a xanthohumol-concentrated hop extract according to claim 9, **characterized in that** ethanol is used as a solvent and concentrations of up to 20 percent by weight of the xanthohumol-concentrated extract are used in the solution.

## Revendications

1. Procédé de préparation d'un extrait de houblon enrichi en xanthohumol, **caractérisé en ce que** l'extrait de houblon contenant le xanthohumol est extrait d'une matière première de houblon contenant du xanthohumol par du CO₂ fortement pressurisé comme solvant, à des pressions supérieures à 500 bar et des températures supérieures à 60°C.

2. Procédé selon la revendication 1, **caractérisé en ce que** l'on réalise l'extraction à des pressions allant de 600 à 1000 bar et des températures allant de 70 à 90°C.

3. Procédé selon la revendication 1, **caractérisé en ce que** comme matière première de houblon, on utilise des granulés de houblon usuels, préextraits par le CO₂ supercritique, qui sont soumis à une extraction ultérieure avec du CO₂ de 600 à 1000 bar, de préférence à 900 bar, et de 60 à 90°C, de préférence de 75 à 90°C, suite à quoi on sépare les constituants dissous avec l'extrait de houblon enrichi en xanthohumol.

4. Procédé selon la revendication 3, **caractérisé en ce que** l'on procède à la séparation à une pression de jusqu'à 200 bar, de préférence de 60 à 70 bar, et une température de jusqu'à 90°C, de préférence de 40 à 60°C, dans un récipient séparateur.

5. Procédé selon la revendication 1, **caractérisé en ce que** comme matière première de houblon, on utilise des granulés de houblon, qui sont extraits de 600 à 900 bar, suite à quoi on sépare du préextrait ainsi obtenu, dans une première étape, à des pressions allant de 200 à 500 bar et des températures allant de 40 à 90°C, l'extrait enrichi en xanthohumol et dans une deuxième étape, à des pressions allant de 60 à 80 bar et des températures de 40 à 60°C, un extrait usuel pour la préparation de la bière.

6. Procédé selon l'une quelconque des revendications précédentes, **caractérisé en ce que** l'extrait de houblon enrichi en xanthohumol est obtenu dans un séparateur, comme une poudre stable exempte de séchage et d'additif.

7. Utilisation d'un extrait de houblon enrichi en xanthohumol, préparé selon l'une quelconque des revendications précédentes, **caractérisée en ce que** l'extrait de houblon est mis en oeuvre comme additif à des aliments solides, pâteux ou liquides.

8. Utilisation d'un extrait de houblon enrichi en xanthohumol, selon la revendication 7, **caractérisée en ce que** l'extrait de houblon est ajouté sous une forme sèche, fluide.

9. Utilisation d'un extrait de houblon enrichi en xanthohumol, selon la revendication 7, **caractérisée en ce que** l'extrait de houblon sous forme sèche, fluide est dissous dans un solvant organique approprié et ajouté à une boisson, de préférence sous la forme d'une addition continue par un processus de pompage ou d'accélération.

10. Utilisation d'un extrait de houblon enrichi en xanthohumol, selon la revendication 9, **caractérisée en ce que** l'on met en oeuvre l'éthanol comme solvant et que l'on met en oeuvre des concentration de jusqu'à 20% en poids de l'extrait de houblon enrichi en xanthohumol dans la solution.
